# EUROPEAN PATENT APPLICATION

(11) **EP 4 273 862 A1**
(43) Date of publication of application: **08.11.2023**
(21) Application number: 22171333.2
(22) Date of filing: 03.05.2022
(51) Int. Cl.: G11B 3/60, G11B 19/20, G11B 19/253

(54) **SYSTEM FOR DRIVING A PLATTER FOR AUDIO TURNTABLE**

(71) Applicant: Audio Technology Switzerland S.A., 1032 Romanel-sur-Lausanne (CH)
(72) Inventor: Huber, Micha, 8487 Zell (CH); Leombruni, Claudio Ivo, 8405 Winterthur (CH)
(74) Representative: Wenger, Joel-Théophile

(57) **Abstract**

The present invention relates to driving system for turntable, and more particularly to a system for maintaining the speed of a drive element (or platter) at a constant level with a high degree of accuracy. It is proposed a driving system for the platter of an audio turntable comprising :
- a first motor (motor1) regulated in speed and connected by a belt with the drive element,
- a second motor (motor2) regulated in torque and connected by a belt with the drive element.

## Description

### Introduction

The present invention relates to driving system for turntable, and more particularly to a system for maintaining the speed of a drive element (or platter) at a constant level with a high degree of accuracy.

In the operation of a turntable, the drive is an essential element. We call "drive" what makes rotating the platter of the turntable. Consequently, this is what allows the reading of the different information inscribed in the groove of the record.

Precision motor speed control circuits have a variety of applications, including phonographic turntables, magnetic audio and video tape recorders, and disk drive units.

### Prior Art

The method to drive the rotation of the platter of the turntable is divided mainly into two categories, the belt drive and the direct drive.

Belt drive is a principle found on many turntable models today. Here, the motor enabling the rotation of the platter is fixed or suspended on the turntable. On some models, such as the Pro-Ject RPM range of turntables (RPM 1 Carbon, RPM 5 Carbon...), the motor is an integral part of the turntable, placed of center of the turntable. In all these configurations, the platter is connected to the motor via a belt.

With a belt drive, the motor is not directly connected to the turntable spindle. Technically, although it may seem simple as configuration, the belt drive ensures a precise rotation of the platter, while reducing the vibrations generated by the motor.

The direct drive is a principle that was very common in the past. Some of today's Hi-Fi manufacturers still use this method, such as Audio Technica or Technics.

The direct drive turntables are designed so that the motor is directly connected to the platter spindle. This allows an instant start as well as an instant stop of the turntable. The rotation speed of the platter is always the same as from the motor. However, because the platter is attached to the motor, vibrations are fed directly from the latter to the former - which are of course then transmitted to the cartridge. So there's inevitably a degree of distortion added to the final performance.

### Brief description of the invention

The present invention proposes a driving system for the platter of an audio turntable comprising :
- a first motor regulated in speed and connected by a first belt with the platter,
- a second motor regulated in torque and connected by a second belt with the platter.

This dual motor embodiment guarantees a precise and stable speed for the platter.

### Brief description of the figures

The present invention will be better understood with the help of the attached figures, given as example only, in which :
- the figure 1 illustrates the two known modes for the driving of the platter
- the figure 2 illustrates the present driving system with two motors,
- the figure 3 illustrates the dual driving system according to one embodiment of the invention,
- the figure 4 illustrates the dual driving system according to another embodiment of the invention,

### Detailed description

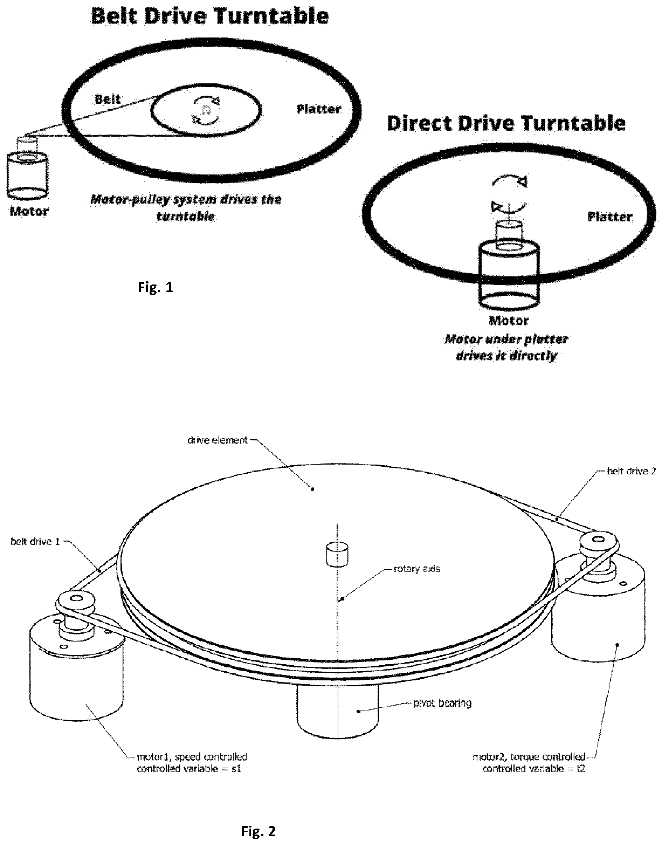

The figure 1 illustrates the common way to drive the platter of the audio turntable.

The left picture is the conventional belt drive with the motor ex-centered from the axis of the platter. The motor comprises a first pulley having a first diameter driving a belt. This belt interacts with a second pully having a second diameter and part of the platter. The ratio between the first diameter and the second diameter plays the role of a speed reduction. The advantage of the belt is to absorb the possible vibrations of the motor.

The right picture is the direct drive system in which the motor is directly driving the platter. The axis of the motor and the axis of the platter is aligned and mechanically coupled. No speed reductor is present and the rotation speed of the motor is the same as the rotation speed of the platter.

Drives with high-precision speed-control are an important element for quality of analogue recording- and playback devices. That applies equally for tape machines and record players.

State-of-the-art are, amongst others, drive-system consisting of a pivoted drive element, connected with at least two electric motors by a belt drive. The speed of these electric motors can be regulated or controlled in a number of ways. By designing a drive-system this way, the torque at the drive element may be increased, but the tolerance field of the speed deviation is not necessarily smaller compared to a one-motor drive-system.

According to the present invention, the driving of the motor uses a conventional belt drive. However, the present invention proposes a driving system for the platter of an audio turntable comprising :
- a first motor regulated in speed and connected by a first belt with the platter,
- a second motor regulated in torque and connected by a second belt with the platter.

The present invention's purpose is to provide a several-motor drive system in such a way, that the tolerance of the speed deviation is kept as low as possible. This object is accomplished by
- controlling the speed of at least one electric first motor and
- regulating or controlling the torque of at least one second electric motor in order to let the speed controller of the other motor or motors operate in the optimal range.

The figure 2 shows the system using two motors. The first motor (motor1) is a speed controlled motor and is driving a drive element with a first belt. Said drive element is the platter receiving the record or the vinyl disc. A second motor (motor2) is also driving the drive element via a second belt. This second motor (motor2) is torque regulated.

The drive element is pivoted around a rotary axis and is terminated with a pivot bearing. Pivot bearings are low-friction bearings that are suitable for pivotal, angular, or oscillating applications.

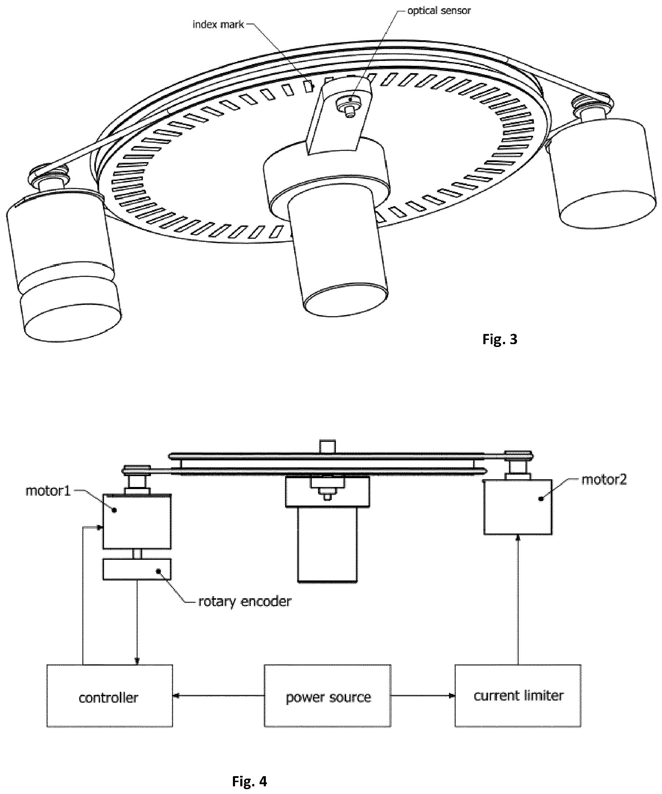

The actual speed of this first electric motor (motor1) is gathered by an encoder and applied to a controller in order to regulate the motor in a close loop system. The power to the motor is adjusted in accordance with the comparison between the measured speed and a reference. In the figure 3, we have an example of an optical encoder collecting the actual speed of the drive element. The value of the actual speed is used to drive the speed controlled motor (motor1).

In the figure 4, we have an example of the close loop regulation as well as another example of the speed determination. Contrarily to the figure 3, the speed is directly measured via a rotary encoder mounted on the axis of the first motor (motor1). The controller receives the speed value and adjusts the voltage of the motor depending on the difference between the actual speed and a reference value. The controller also controls the feedback reaction by suitable filters. It is to be noted that the reference value can be adjusted by the user, usually through a potentiometer.

The second electric motor (motor2) is connected by the second belt drive to the drive element. The torque of this second electric motor (motor2) is set to a predetermined torque by a current limitation circuit.

The magnitude of the variation of the voltage applied to the first motor (motor1) is dependent of the load driven by the first motor (motor1). In order to achieve a high stability of the rotation speed, the drive element is comparably heavy. With a driving system using only the speed controlled motor (Motor1), the time to obtain the nominal speed could be high since we have to find a tradeoff between the amplitude of the reaction and the stability. For high stability, the close loop system comprises a lowpass filter that slowly adjusts the speed. The inertia of the drive element is to be taken into account while designing the filtering system in order to avoid undue oscillations.

By adjusting the control variable of the torque (t2) of the second motor (motor2), this load can be matched for keeping the tolerance field of the speed controller as low as possible. In other words, the value of the torque (t2) selected for the second motor (motor2) below the necessary torque to keep the drive element in rotation without the help of the first motor. In case that the first motor (motor1) is stopped, the second motor (motor2) continues to drive the drive element and the speed will slowly decrease until it stops. The role of the second motor (motor2) is to bring the majority of the torque for rotating the drive element, the first motor (motor1) only complementing the torque to bring the drive element into the expected speed.

The torque value of the second motor (motor2) is defined based on the weight of the driving element and the resistance of the rotation of the drive element. According to one embodiment, the torque provided by the second motor (motor2) provides between 70% to 95% of the total torque required to keep the drive element at the requested speed.

According to one particular embodiment, the driving system is using one belt connecting the platter to the first and the second motor.

### Settings

As we mentioned above, the majority of the torque is provided by the second motor (motor2). By majority, we understand more than 50% of the nominal torque. In order to determine the proper setting for the torque, the weight of the drive element and the resistance of the pivot bearing are taking into account. The weight is constant but the weight of the record can change. The resistance can also vary in time and depending on the environmental conditions (temperature, humidity, wear of the elements).

We can consider, as an example, the case in which the optimal torque of the second motor is between 90% and 95% of the nominal torque, said nominal torque being the torque necessary to drive the record at the expected speed. As a consequence, the optimal torque of the fist motor is between 5% to 10% of the nominal torque.

A first method to determine the torque of the second motor is to take the best-case scenario. The torque is determined with no record on the platter and with the minimum resistance in rotation. Once at the expected speed, the second motor is maintained powered and the first motor is disabled. The torque of the second motor (i.e. the maximum torque) is set to keep the drive element at the expected speed. In this case, the nominal torque and the second torque are the same since the first motor is disabled. Once the maximum torque determined, the second torque, and therefore the current of the current limiter of the second motor (motor2) is adjusted to be below this value, thus letting the first torque of the first motor (motor1) to complement the second torque to obtain the expected speed. According to a particular embodiment, the current is set to the second motor in order to obtain a second torque at, for example, 95% of the nominal torque in the best conditions. The value is stored in memory and used each time the turntable is powered on. This value of 95% was determined without a record and in normal operation, the set value for the torque of the second motor will only provide 90% of the nominal torque, the remaining torque being provided by the first motor.

A second method can be used which is to dynamically determine the nominal torque using only the second motor (motor2). It can be executed at the setting up of the turntable or at any time during the life of the turntable. In this case, the record can be placed on the drive element and the setting process can take place. The second motor (motor2) is powered and the current slowly increased. The first motor (motor1) is disabled but the speed is measured by the rotary encoder. The current of the second motor (motor2) is then adjusted until the speed of the drive element is at the expected speed in real conditions. Thus, the value of the current applied to the second motor (motor2) is decreased to 95% (for example) and this value is memorized.

The setting phase is over and the first and second motors can be used together to obtain the expected speed, the first motor providing the remaining torque to obtain the nominal torque.

A third method is an auto setting based on the measurement of the first motor's torque. Based on the first method, the best case scenario has determined the minimal torque of the second motor to obtain 95% of the nominal torque. During operation, with the use of an heavy record for example, the torque of the first motor is measured (for example by measuring the current applied to the first motor) and if the torque of the first motor is outside the optimal toque of the first motor (for example between 5 to 10% of the nominal torque), the torque of the second motor is adjusted to restore the operation of the first motor within the optimal torque for the first motor.

The above values are given for information only and can vary without departing from the inventive concept.

## Claims

1. A driving system for the platter of an audio turntable comprising :
- a first motor (motor1) regulated in speed and connected by a belt with the drive element,
- a second motor (motor2) regulated in torque and connected by a belt with the drive element.

2. The driving system of the claim 2 wherein the belt of the first motor (motor1) and the belt of the second motor (motor2) is the same belt.

3. The driving system of the claim 2 wherein the first motor (motor1) is connected with the drive element by a first belt, and the second motor (motor2) is connected with the drive element by a second belt.

4. The driving system of claim 1, 2 or 3 wherein the second motor (motor2) is controlled by a current limiter.

5. The driving system of the claim 4, wherein the current of the second motor (motor2) is selected so as to provide the majority of the torque for rotating the drive element, the first motor (motor1) only complementing the torque to rotate the drive element into the expected speed.

6. The driving system of the claim 4, wherein the current of the second motor (motor2) is selected to provide between 70 to 95% of the total torque required to keep the drive element at the expected speed.

7. The driving system of any of the claims 5 or 6, wherein it comprises means to measure the torque of the first motor and means to adjust the torque of the second motor to place the torque of the first motor within a predefined optimal range for the torque of the first motor.
